# EUROPEAN PATENT APPLICATION

(11) **EP 1 701 312 A1**
(43) Date of publication of application: **13.09.2006**
(21) Application number: 06004975.6
(22) Date of filing: 10.03.2006
(51) Int. Cl.: G07F 7/10

(54) **Authentication device, mobile terminal, and authentication method**

(30) Priority: 11.03.2005 JP 2005069906
(71) Applicant: NTT DoCoMo Inc., Chiyoda-Ku Tokyo 100-6150 (JP)
(72) Inventor: Terada, Masayuki, Tokyo 100-6150 (JP); Mori, Kensaku, Tokyo 100-6150 (JP); Ishii, Kazuhiko, Tokyo 100-6150 (JP); Hongo, Sadayuki, Tokyo 100-6150 (JP)
(74) Representative: GROSSE BOCKHORNI SCHUMACHER

(57) **Abstract**

The security of an IC card is improved by managing success and failure in authentication individually for each terminal program. An IC card includes a random number generation section, a source authentication section, and a process execution section. Upon receipt of a message of type "I", the random number generation section generates a random number n, and stores it in a random number storage section by associating the random number n with a source included in the message. Upon receipt of a message of type "2" from the source and in a case where the random number n corresponding to the source is stored, the source authentication section collates a value m calculated from an authentication key held by the IC card and the random number n with a value m included in the message of type "2". When both values agree, upon receipt of a message of type "3" from the source, the process execution section executes a process in accordance with a type of the message.

## Description

### BACKGROUND OF THE INVENTION

### Field of the Invention

The present invention relates to an authentication technique of a program capable of accessing an IC card comprised by a mobile terminal.

### Related Background of the Invention

Recently, as one of means for realizing ubiquitous computing, TRON (The Real-time Operating system Nucleus) is being developed. For a mobile terminal in which an IC (Integrated Circuit) card such as an e-TRON card is built-in, a technique has been proposed in which, when an electronic right value (hereinafter, referred to as an "electronic value"), such as an electronic ticket, is transmitted and received between terminals, transmission and reception of the electronic value is performed directly between both IC cards. As an example of a system in which such a technique has been applied to charging of the amount due of electronic value, an electronic value charge system assuring both high safety and simplicity is disclosed in the patent document(Japanese Patent Application Laid-Open No. 2003-337887).

In order to realize such a system, a scheme has been proposed in which a built-in IC card in a mobile terminal and a program (hereinafter, referred to as a "terminal program") also stored in the same mobile terminal perform transmission and reception of messages mutually for cooperative operation. In such a scheme, a terminal program transmits a message to an IC card or another terminal program by giving a message of specified form to a library provided on a mobile terminal. A message of specified form includes, for example, a source ID (src), a destination ID (dst), a message type (mtype), and message content (param).

The above-mentioned scheme, however, is not one which refers to a means with which an IC card authenticates a terminal program, in other words, a means that eliminates an apprehension that an unauthorized user uses an IC card via a terminal program. However, such an apprehension is eliminated by a combination with a conventional external authentication scheme as same as an external authentication command of ISO 7816-4, if a terminal program is alone. In other words, an IC card holds in advance secret information that an authorized terminal program holds and the use of the IC card is limited to certain terminal programs (or their users) by authentication using, for example, a hash function.

### SUMMARY OF THE INVENTION

The authentication method described above is effective to a single terminal program, however, is not necessarily safe in the environment in which a plurality of programs are executed in a mobile terminal. In other words, if there is at least any one of plural terminal programs that has succeeded in authentication in the mobile terminal, there is a possibility that all of the programs is allowed to use functions of the IC card even if the other terminal programs have not succeeded in authentication.

Therefore, an object of the present invention is to improve security of an IC card which performs transmission and reception of messages with a terminal program, by managing success and failure in authentication individually for each terminal program.

An authentication device according to the present invention comprises: a random number generation means for generating a random number upon receipt of a message having a first type, and storing it by associating the random number with a source included in the message; a source authentication means for judging, upon receipt of a message having a second type from the source and when the random number corresponding to the source is stored, whether or not a value calculated from an authentication key held by the same authentication device and the random number agrees with a value included in the message having the second type (for example, a value included in the content of the message); and a process execution means for executing, when the source authentication means judges that the calculated value agrees with the value included in the message and upon receipt of a message having a third type from the source, a process in accordance with a type of the message.

An authentication method according to the present invention comprises the steps of: generating a random number upon receipt of a message having a first type and storing it by associating the random number with a source included in the message; judging, upon receipt of a message having a second type from the source and when the random number corresponding to the source is stored, whether or not a value calculated from an authentication key held by the same authentication device and the random number agrees with a value included in the message having the second type; and executing, when it is judged that the calculated value agrees with the value included in the message and upon receipt of a message having a third type from the source, a process in accordance with a type of the message.

According to the invention, the authentication device generates a random number individually for each source of a message and authenticates a source based on a value calculated using the random number and an authentication key. Due to this, authentication for each source identifier of a message and accordingly, individual authentication for each source is realized. Therefore, even in an environment in which a plurality of programs can be executed in an authentication device, an apprehension can be avoided that success in authentication in a single program causes other unauthorized programs to be affirmatively authenticated as conventionally. As a result, the security level of the authentication device is improved.

Here, an authentication device is, for example, an IC card. A source is, for example, a terminal program, however may be one outside a mobile terminal. Further, a source may be another IC card.

In a case where the authentication device described above is an IC card and the source described above is a terminal program, it is possible for the same mobile terminal to comprise the IC card and the terminal program such that mutual communication of messages is possible. When a mobile terminal includes a plurality of terminal programs, it is possible for the mobile terminal to have a configuration described below. In other words, the mobile terminal includes an IC card as the authentication device described above and further includes a plurality of terminal programs for transmitting messages having the types from the first type up to the third type to the IC card, and the IC card generates a random number, authenticates a source, and executes a process individually for each of the terminal programs in accordance with the message. With a mobile terminal having such a configuration, it is also possible for the IC card to manage success and failure in authentication individually for each terminal program, therefore, the improvement of the security that has precluded the use of the IC card by an unauthorized program can be realized.

It is preferable that the authentication device according to the present invention further comprises: a storage means for storing a predetermined number of source identifiers of messages that have succeeded in authentication in order; and a storage control means for storing the source identifier at the initial location of the storage means when the source authentication means judges that the calculated value and the value included in the message agree, and the storage control means moves the identifier to the initial location in the storage means upon receipt of a message having the third type in a case where the source identifier of the message is stored in the storage means.

According to the present invention, a source identifier of a message transmitted at a newer time is more likely to be stored at the initial location in the storage means. Due to this, the source identifier with a high message transmission frequency is held in the authentication device with priority and efficient management of the identifier is made possible.

Further, the storage control means may be one which deletes the last identifier in the storage means when the number of stored identifiers exceeds the predetermined number. Due to this, it is possible to keep constant the number of identifiers held in the storage means. As a result, efficient management of the identifier is realized while suppressing the data capacity of a storage region. Such suppression of data amount is particularly effective in an IC card the possible storage capacity of which is limited.

Furthermore, the storage control means may be one which stops processing once and outputs a message to notify that effect when the number of stored identifiers exceeds the predetermined number. After this, if it is designed such that the identifier is deleted or held based on the directions from a user, it is possible for the user to simply and quickly grasp that the upper limit value of the number of identifiers has been exceeded and to easily judge whether or not deletion is needed, and preferably its object.

According to the present invention, in an authentication device (for example, an IC card) that performs transmission and reception of messages with a source (for example, a terminal program), it is made possible to improve a security of authentication device by managing success and failure in authentication individually for each source.

### BRIEF DESCRIPTION OF THE DRAWINGS

Fig.1 is a diagram showing a functional configuration of a mobile terminal according to the present invention.
Fig.2 is a diagram for explaining a first phase of program authentication process executed by the mobile terminal and the former half of a second phase.
Fig.3 is a diagram for explaining the latter half of the second phase of the program authentication process executed by the mobile terminal.
Fig.4 is a diagram for explaining a third phase of the program authentication process executed by the mobile terminal.

### DESCRIPTION OF THE PREFERRD EMBODIMENTS

An embodiment of the present invention is explained below with reference to accompanied drawings for exemplification.

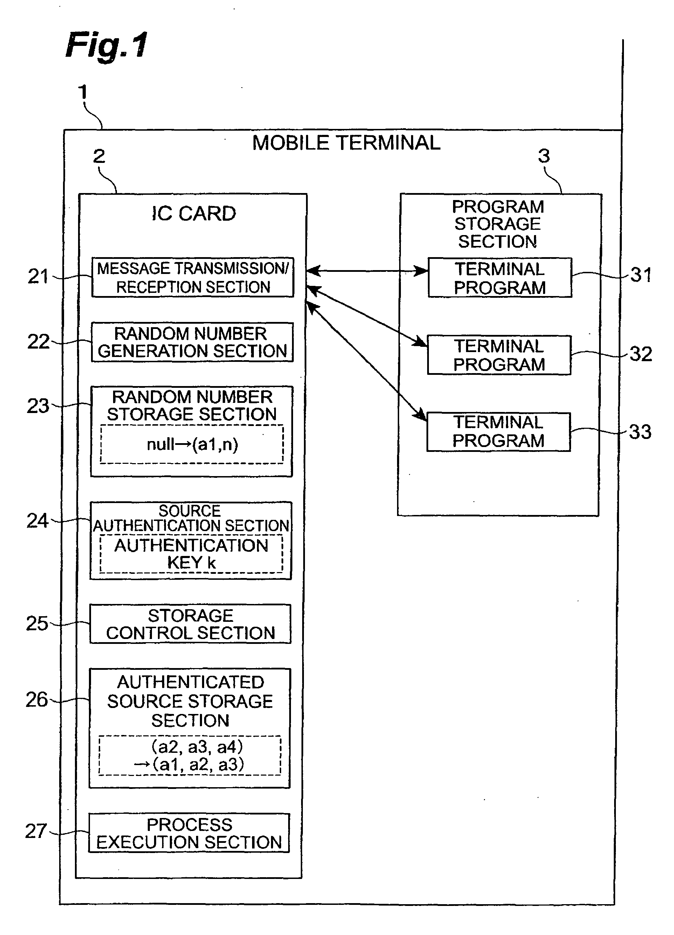

As shown in Fig.1, a mobile terminal 1 in the present embodiment includes at least an IC card 2 (corresponding to an authentication device) and a program storage section 3. The mobile terminal 1 is, for example, a mobile phone or a PDA (Personal Digital Assistance), however, as long as it is a terminal device having a communication facility, there is no limitation imposed by its facility and use.

The IC card 2 is configured so as to include a message transmission/reception section 21, a random number generation section 22 (corresponding to a random number generation means), a random number storage section 23, a source authentication section 24 (corresponding to a source authentication means), a storage control section 25 (corresponding to a storage control means), an authenticated source storage section 26 (corresponding to a storage means), and a process execution section 27 (corresponding to a process execution means). The respective components are connected so as to allow mutual input and output of signals via a bus (not shown). With the view of assuring high secrecy from external programs and devices and resistance to them, it is preferable for the IC card 2 to have the properties against tamper. The IC card 2 is assigned with an identifier i.

The message transmission/reception section 21 performs transmission and reception of various messages with terminal programs 31 to 33 via a bus. Details of the messages will be described later in the explanation of operation. The message transmitted or received in the present embodiment is expressed in the form of <source ID, destination ID, message type, message content> including accompanied drawings. In addition, "Rn (n is a natural number)" in the message type indicates that the processing in the IC card 2 has been completed normally. In contrast to this, "En (n is a natural number)" indicates that the processing in the IC card 2 has been completed abnormally.

The random number generation section 22 generates a random number n with reception of a message having the type "1 " as a trigger.

The random number storage section 23 holds a set of the random number n generated by the random number generation section 22 and a source ID corresponding thereto such that it can be referred to. The initial state of the random number storage section 23 is "null" that indicates an empty state.

The source authentication section 24 holds an authentication key k. As the authentication key k, for example, a password for user identification, such as a PIN (Personal Identity Number) code can be used. When the storage of the random number n corresponding to the source of the message is confirmed, the source authentication section 24 performs authentication of the source with reception of a message having the type "2" as a trigger. For authentication of the source, safe hash functions, for example, such as SHA-1 (SecureHash Algorithm 1) and MD 5 (Message Digest 5), can be used. The source authentication section 24 generates a hash value by substituting the above-mentioned authentication key k and the above-mentioned random number the storage of which has been confirmed in a predetermined hash function H and the value is collated with the content (for example, "m") of the above-mentioned message. When the result of collation is that both the values agree, the authentication is regarded as successful. The result of the successful authentication is notified to the storage control section 25. The result of failed authentication is notified to the source.

The storage control section 25 adds and deletes the authenticated source ID in the authenticated source storage section 26, or change the order of storage. Further, prior to execution of process by the process execution section 27, the storage control section 25 judges presence/absence of the source ID in an ordered list of the authenticated source storage section 26.

The authenticated source storage section 26 holds the list in which the source IDs that have succeeded in authentication are in order such that it can be updated. In the present embodiment, the maximum number of identifiers that can be stored in the list is assumed to be three and in the initial state, they are assumed to be in descending order (a2, a3 and a4) from the first ID. Incidentally, "a4" is the identifier of a terminal program other than the terminal programs 31 to 33.

The process execution section 27 executes a process of "data" held as a content of the message with reception of the message having the type "3" as a trigger.

In the program storage section 3, the terminal programs 31 to 33 are stored. Each of the terminal programs 31, 32, and 33 is an application program for the processing of predetermined data included in the message, and has respective identifiers "a1, a2 and a3".

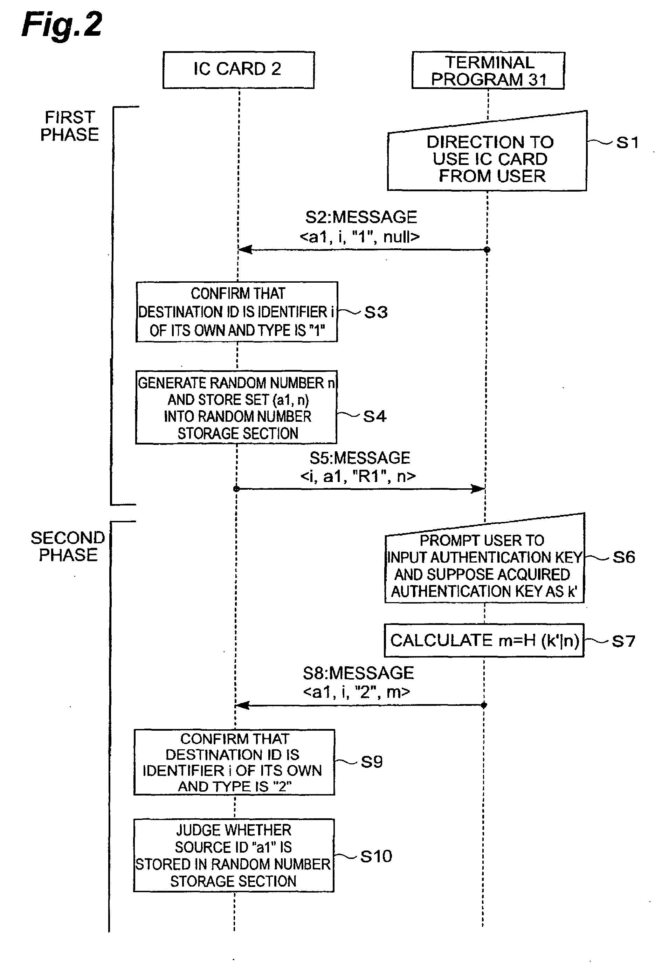

Next, with reference to Figs. 2 to 4, the operation of the mobile terminal 1 in the present embodiment along with the respective steps constituting the authentication method according to the present invention are described.

The description premises that the mobile terminal 1 is in operation to activate the terminal programs 31, 32, and 33.

When a user of the mobile terminal 1 directs the use of the IC card 2 (S1 in Fig.2), first, a message <a1, i, "1", null> is sent from the program 31 to the IC card 2 (S2). As described above, "null" indicates that the message content is empty data. In addition, the use of the IC card 2 means, for example, processing for registering new personal information (a telephone number etc.) to the library of the IC card 2, processing for searching for and updating already existing personal information, etc.

When receiving the above-mentioned message, the IC card 2 confirms that the destination ID is the identifier i of the IC card 2 and the message type is "1" (S3). At this time, if the message type is other than "1", the processing is stopped.

After this, the IC card 2 generates the random number n by the random number generation section 22, and stores it in the random number generation section 23 by associating it with the source ID "a1" (S4). Since the initial value in the random number storage section 23 is "null", the random number storage section 23 is updated to a set (a1, n) as a result of the storage processing. After the update, a message <i, a1, "R1", n> is returned to the terminal program 31 by the message transmission/reception section 21 (S5).

The terminal program 31 that has received the above-mentioned message prompts the user to input an authentication key in accordance with the type "R1 ", and the authentication key obtained as a result of the input is supposed to be k' (S6). In the terminal program 31, after m=H (k' |n) is calculated using a predetermined hash function H (S7), a message <a1, i, "2", m> the content of which is the value is transmitted to the IC card 2 as its destination (S8).

When receiving the above-mentioned message, as in S3, the IC card 2 confirms whether the destination ID is the identifier i of the IC card 2 and the message type (S9). Since the message type is "2", the IC card 2 executes a process in accordance with this in S10. In other words, the IC card 2 judges whether or not the source ID "a1" included in the above-mentioned message received in S9 is already stored in the random number storage section 23, that is, whether or not the terminal program 31 is a program that has ever transmitted a message in the past (S10). This judgment is performed by the source authentication section 24.

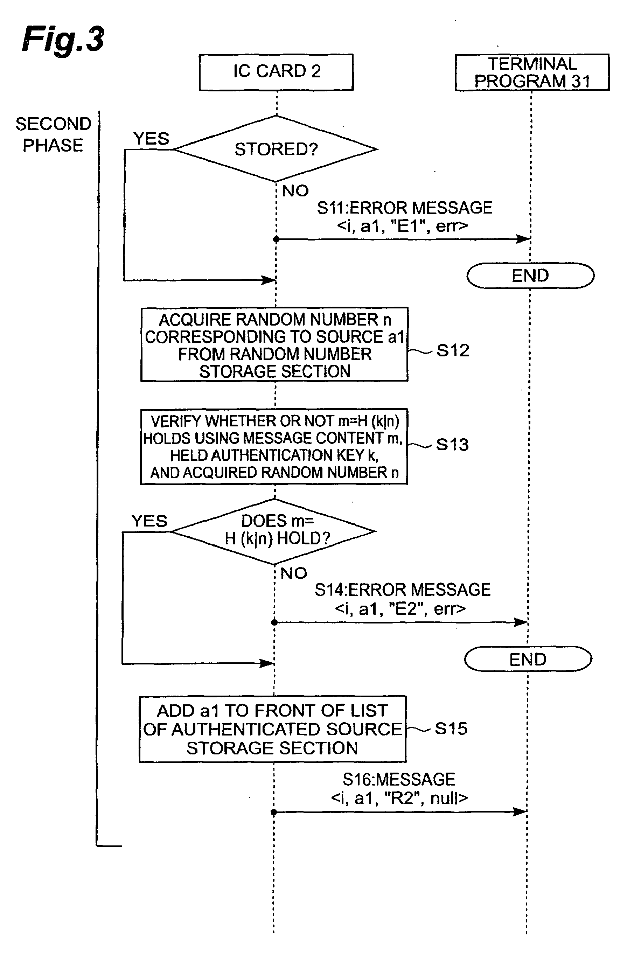

Moving to Fig.3, when "a1" is stored (S10; Yes), process is moved to S12, which will be described later. When not stored, that is, the search has failed (S10; NO), the IC card 2 returns an error message to that effect to the terminal program 31 (S11). The message is expressed by <i, a1, "E1 ", err>, thereby it is made possible to identify that the source a1 is not registered by the error type "E1" and "err" that includes an error cause.

In S12, notified that the source al is already registered, the IC card 2 acquires a random number n corresponding to the source a1 from the random number storage section 23 with the source authentication section 24. After this, authentication of the source a1 is performed by the following procedure. First, the source authentication section 24 substitutes the authentication key k which is held by its own and the random number n of the source a1 acquired in S12 in a predetermined hash function H. Then, a hash value, which is the result of the calculation, is collated with "m", which is the content of the message received in S8 and based on whether they agree or not, success or failure of the authentication of the source a1 is determined (S13). If they agree, the authentication succeeds and if not, the authentication fails.

If the authentication key k' input in S6 is an authorized one, it must be true that the same hash value can be generated using the random number n acquired in S5 also in the terminal program 31, which is the source. Therefore, as long as the above-mentioned calculation results agree, it is possible to judge that the source a1, that is, the terminal program 31, is an authorized program.

On the other hand, when the authentication fails (S13; NO), as in S11, an error message <i, al, "E2", err> to that effect is transmitted to the terminal program 31 from the IC card 2 (S14). In this case, the terminal program 31 detects that the authentication has failed from the error type "E2" and its content "err", and the program authentication process ends.

If the authentication has succeeded in S13 (S13; YES), the storage control section 25 adds "a1", which is the identifier of the authenticated source (that has succeeded in authentication) at the initial location of the list of the authenticated source storage section 26 (S 15). The initial state of the authenticated source storage section 26 is (a2, a3 and a4) as described above, however the maximum number of identifiers that can be stored is 3. Because of this, when "a1" is added, "a4" stored at the last is deleted from the authenticated source storage section 26 and the above-mentioned list is updated to (a1, a2 and a3). After the update, as in S5, a message <i, a1, "R2", null> indicating that the authentication result has been reflected in the list is transmitted to the terminal program 31 from the message transmission/reception section 21 (S16).

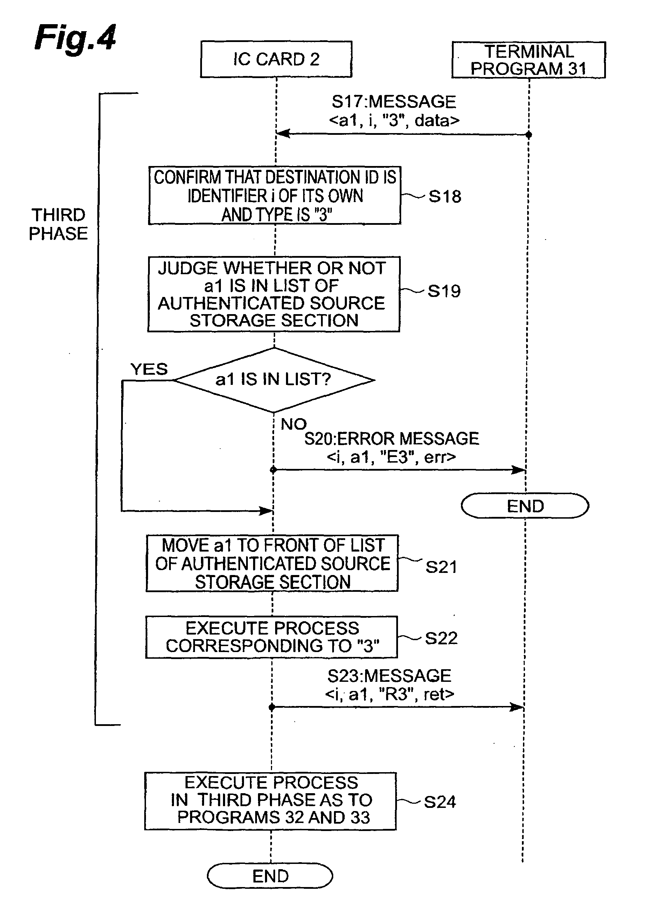

Next, referring to Fig.4, a third phase in which processing directed by the terminal program 31 is actually executed by the IC card 2 is described.

When the terminal program 31 directs the IC card 2 to execute a process of "data" by transmitting a message <a1, i, "3", data> (S17), the IC card 2 confirms that the message is to be sent to the card of its own based on the destination ID. At the same time, the message type is confirmed (S18).

Incidentally, "data" is arbitrary data to be processed by the process associated with the message type "3", however, when execution of a program is not accompanied by the processing of data, it may be "null".

When the destination ID is not "i", the IC card 2 stops the processing after discarding the message, however, if the destination ID is "i", the process in accordance with the message type "3" is executed. In other words, in S19, the IC card 2 refers to the list of the authenticated source storage section 26 with the storage control section 25 and judges whether or not the source ID "a1" exists. If "a1" does not exist in the list (S 19; NO), an error message <i, a1, "E3", err> to that effect is transmitted to the terminal program 31, which is the source of the message (S20), and a series of program authentication process ends.

The result of the above-mentioned judgment is that "a1" exists in the list of the authenticated source storage section 26 (S 19; YES), the storage control section 25 moves "a1" to the initial location of the list (S21). However, in the present embodiment, at the point in S15 shown in Fig.3, "a1" has been stored at the initial location, therefore, the position of "a1" is not moved and remains at the initial location. At the point when the process in S 19 is executed, if the list of the authenticated source storage section 26 is, for example, (a2, a3 and a1), the list is updated to (a1, a2 and a3) as a result of the processing in S21.

In S22, the process execution section 27 further executes a process of "data" as the process corresponding to the message type "3". After the execution, the IC card 2 transmits a message <i, a1, "R3", ret> to notify that the execution of process has completed normally with the message transmission/reception section 21 (S23). Incidentally, "ret" indicates the result of processing and may be "null" in some cases.

A series of processes in S17 to S23 (the third phase shown in Fig.4) can be executed by the same processing procedure as the terminal program 31, as to the terminal programs 32 and 33 (S24).

In S18, even if the destination ID and the message type are confirmed, as to the source program the ID of which is not stored in the authenticated source storage section 26, it is regarded as a terminal program that has not yet succeeded in authentication and the directed process is not executed. As described above, the IC card 2 individually and previously prevents the process from being executed by a terminal program that has not yet succeeded in authentication and thus precludes the use of the IC card 2 by an unauthorized program or its user. Due to this, high security is maintained.

As described above, the mobile terminal 1 including the IC card 2 performs access authentication for each of the terminal programs 31 to 33. In other words, when a user of the mobile terminal 1 desires to use the information of the IC card 2 with the terminal program 31, source authentication processing by the terminal program 31 is required and similarly, when the use with the terminal programs 32 and 33 is desired, independent authentication process by the respective terminal programs is required. Because of this, an apprehension that despite the fact that an unauthorized terminal program exists in the terminal programs 31 to 33, as conventionally access by the program is permitted is overcome without fail.

In addition, the ID of a terminal program that has succeeded in authentication is sequentially held at the initial location in the authenticated source storage section 26 as a storage means and at the same time, the ID of the old terminal program at the time of authentication is deleted accordingly. Therefore, it is made possible for the IC card 2 to suppress a required data capacity to a constant capacity while holding with priority an authenticated source ID having great possibility of being used after authentication. Such an improvement in efficiency of data hold is particularly effective to an IC card of a mobile terminal the storage data capacity of which is limited, when the present application is applied.

## Claims

1. An authentication device comprising:
a random number generation means for generating a random number upon receipt of a message having a first type, and storing it by associating the random number with a source included in the message;
a source authentication means for judging, upon receipt of a message having a second type from the source and when the random number corresponding to the source is stored, whether or not a value calculated from an authentication key held by the same authentication device and the random number agrees with a value included in the message having the second type; and
a process execution means for executing, when the source authentication means judges that the calculated value agrees with the value included in the message and upon receipt of a message having a third type from the source, a process in accordance with a type of the message.

2. The authentication device according to claim 1, further comprising:
a storage means for storing a predetermined number of source identifiers of messages that have succeeded in authentication in order; and
a storage control means for storing the source identifier at the initial location of the storage means when the source authentication means judges that the calculated value and the value included in the message agree, wherein
the storage control means moves the identifier to the initial location in the storage means upon receipt of a message having the third type in a case where the source identifier of the message is stored in the storage means.

3. A mobile terminal comprising:
an IC card as the authentication device according to claim 1; and further
a plurality of terminal programs for transmitting messages having the types from the first type up to the third type to the IC card, wherein
the IC card generates a random number, authenticates a source, and executes a process individually for each of the terminal programs in accordance with the message.

4. An authentication method comprising the steps of:
generating a random number upon receipt of a message having a first type and storing it by associating the random number with a source included in the message;
judging, upon receipt of a message having a second type from the source and when the random number corresponding to the source is stored, whether or not a value calculated from an authentication key held by the same authentication device and the random number agrees with a value included in the message having the second type; and
executing, when it is judged that the calculated value agrees with the value included in the message and upon receipt of a message having a third type from the source, a process in accordance with a type of the message.
